(19) Europäisches Patentamt
European Patent Office
Office européen des brevets

(11) **EP 2 996 219 A1**

(12) **EUROPÄISCHE PATENTANMELDUNG**

(43) Veröffentlichungstag:
**16.03.2016 Patentblatt 2016/11**

(51) Int Cl.:
***H02J 9/00*** *(2006.01)*

(21) Anmeldenummer: **14184278.1**

(22) Anmeldetag: **10.09.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Moog Unna GmbH**
**59423 Unna (DE)**

(72) Erfinder:
• **Rösmann, Tobias**
**44263 Dortmund (DE)**

• **Wiesenthal, Thomas**
**59759 Arnsberg (DE)**
• **Schreiner, Björn**
**58239 Schwerte (DE)**

(74) Vertreter: **Schmalz, Günther**
**Withers & Rogers LLP**
**4 More London Riverside**
**London SE1 2AU (GB)**

(54) **Verfahren zur Betriebsvorbereitung eines Notenergiespeichers**

(57) Ein Verfahren zur Betriebsvorbereitung eines elektrischen Notenergiespeichers (1) mit wenigstens einem Energiespeicherelement (2), zur Bereitstellung von elektrischer Notenergie für wenigstens einen Energieverbraucher (3), wobei die dem Notenergiespeicher (1) entnehmbare Energie $E_L$ und/oder die dem Notenergiespeicher (1) entnehmbare Spitzenleistung $P_{max}$ bestimmt wird, und die Betriebsbereitschaft festgestellt wird, sobald die entnehmbare Energie $E_L$ einen Mindestenergiewert erreicht hat und/oder die entnehmbare Spitzenleistung $P_{max}$ einen Mindestleistungswert erreicht hat.

Bei niedriger Ausgangstemperatur wird der Notenergiespeicher (1) über eine Entladeeinrichtung (4) zum Erwärmen des Notenergiespeichers (1) entladen und die entnehmbare Energie $E_L$ und/oder entnehmbare Spitzenleistung $P_{max}$ wird erneut bestimmt.

Anwedung bevorzugt für ein Pitchsystem einer Windenergieanlage.

Fig. 2

EP 2 996 219 A1

**Beschreibung**

Die Erfindung betrifft ein Verfahren zur Betriebsvorbereitung eines Notenergiespeichers mit wenigstens einem Energiespeicherelement, wobei der Notenergiespeicher zur Bereitstellung von elektrischer Notenergie für wenigstens einen Energieverbraucher ausgestaltet ist, wobei die dem Notenergiespeicher entnehmbare Energie $E_L$ und/oder die dem Notenergiespeicher entnehmbare Spitzenleistung $P_{max}$ bestimmt wird und die Betriebsbereitschaft festgestellt wird, sobald die dem Notenergiespeicher entnehmbare Energie $E_L$ einen festlegbaren Mindestenergiewert erreicht hat und/oder die dem Notenergiespeicher entnehmbare Spitzenleistung $P_{max}$ einen festlegbaren Mindestleistungswert erreicht hat.

Die Erfindung betrifft ferner ein Verfahren zur Betriebsvorbereitung eines Pitchsystems für eine Windenergieanlage, wobei das Pitchsystem wenigstens einen Notenergiespeicher mit wenigstens einem Energiespeicherelement aufweist. Die Erfindung betrifft des Weiteren ein Computerprogrammprodukt mit Programminstruktionen zur Ausführung der erfindungsgemäßen Verfahren. Die Erfindung betrifft ferner ein Pitchsystem für eine Windenergieanlage, wobei das Pitchsystem wenigstens einen Notenergiespeicher mit wenigstens einem Energiespeicherelement aufweist. Die Erfindung betrifft des Weiteren eine Windenergieanlage mit einem derartigen Pitchsystem.

Notenergiespeicher zur Energieversorgung von Energieverbrauchern mit elektrischer Energie finden in vielen Bereichen Anwendung. In der Regel sind die mit Notenergie zu versorgenden Energieverbraucher sicherheitsrelevant. Beispiele für derartige sicherheitsrelevante Energieverbraucher sind insbesondere Motoren in Personenfahrstühlen oder das Pitchsystem in einer Windenergieanlage.

Bei Ausfall des externen Netzes, wie es zum Beispiel bei einem Gebäudebrand vorkommen kann, ist es erforderlich das Personenfahrstühle ohne die vom externen Netz bereitgestellte Energie in der Lage sind zum nächstgelegenen Stockwerk zu fahren und die Türen zu öffnen, damit in dem Fahrstuhl befindliche Personen sich in Sicherheit bringen können.

Moderne Windenergieanlagen sind in der Regel mit elektrischen Pitchsystemen ausgestattet, die je Rotorblatt wenigstens einen als Pitchmotor bezeichneten Elektromotor aufweisen. Durch Rotation der Rotorblätter um ihre jeweilige Längsachse regeln derartige Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht und der Rotor mangels Antrieb durch den Wind zum Stillstand kommt. Die Energieversorgung des Pitchsystems erfolgt üblicherweise durch das Netz, in das die Windenergieanlage auch den erzeugten Strom einspeist. Bei Netzausfall kann sich eine Gefahrensituation beispielsweise dadurch ergeben, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten.

Um eine derartige Gefahrensituation auch bei Netzausfall abwenden zu können, müssen die Rotorblätter auch ohne die Energieversorgung des Pitchsystems durch das externe Netz in die Fahnenstellung verfahrbar sein. Hierzu ist aus dem Stand der Technik bekannt das Pitchsystem mit einem oder mehreren Notenergiespeichern auszustatten, die bei Netzausfall die Energieversorgung des Pitchsystems und somit die Einsatzfähigkeit des Pitchsystems gewährleisten, zumindest bis die Rotorblätter in die sichere Fahnenstellung gebracht worden sind.

Um die beschriebenen Maßnahmen während einer Notsituation ohne Energieversorgung durch das Netz durchführen zu können, muss der Energieverbraucher dem Notenergiespeicher eine Mindestenergiemenge und/oder eine Mindestleistung entnehmen können.

Bei der Entnahme von Energie aus einem Notenergiespeicher treten stets Verluste $E_V$ auf, die im Wesentlichen auf den Innenwiderstand $R_i$ des Notenergiespeichers zurückgehen. Folglich ist die in dem Notenergiespeicher gespeicherte Energie $E_C$ gleich der Summe der Verluste $E_V$ und der entnehmbaren Energie $E_L$:

$$E_C = E_V + E_L$$

Das heißt die entnehmbare Energie $E_L$ ist die Energie, die nach Abzug der unvermeidlichen Verluste $E_V$ effektiv dem Energieverbraucher zur Verfügung gestellt werden kann.

Die entnehmbare Energie $E_L$ hängt von dem angenommen Laststromverlauf $I(t)$ während einer Notsituation ab, wobei der Laststromverlauf $I(t)$ den Strom angibt, der dem Notenergiespeicher in einer Notsituation vom Energieverbraucher entnommen wird. Die entnehmbare Energie $E_L$ lässt sich somit näherungsweise als die Differenz aus der gespeicherten Energie $E_C$ und dem Zeitintegral des Produktes des Innenwiderstands $R_i$ und dem Quadrat des Laststromverlaufs $I(t)$ angeben:

$$E_L = E_C - E_V \approx E_C - \int_{t_0}^{t_1} R_i I^2(t)\,dt$$

Die Grenzen des Integrals sind wiederum der Startzeitpunkt $t_0$ ab dem der Energieverbraucher in einer Notsituation Energie aus dem Notenergiespeicher entnimmt und der Endzeitpunkt $t_1$ ab dem der Energieverbraucher keine Energie mehr aus dem Notenergiespeicher entnimmt. Die Näherung bei dieser Berechnung besteht darin, dass andere Verluste, als die am Innenwiderstand $R_i$ des Notenergiespeichers anfallenden, vernachlässigt werden.

Zur Bestimmung der entnehmbaren Energie $E_L$ sind somit lediglich die im Notenergiespeicher gespeicherte Energie, der Innenwiderstand $R_i$ und der angenommenen Laststromverlauf $I(t)$ notwendig. Die Bestimmung der entnehmbaren Energie $E_L$ des Notenergiespeichers und des Innenwiderstandes $R_i$ des Notenergiespeichers kann auf unterschiedliche Art erfolgen. Eine Methode ist das kurzzeitige Entladen des Notenergiespeichers über einen Widerstand und die Messung der Spannung und des Entladestroms. Hieraus wiederum können die dem Notenergiespeicher entnehmbare Energie $E_L$ und der Innenwiderstandes $R_i$ des Notenergiespeichers berechnet werden. Der Laststromverlauf $I(t)$ ist abhängig von der Belastung des Energieverbrauchers während der Notsituation und kann insbesondere experimentell bestimmt werden.

Die dem Notenergiespeicher entnehmbare Leistung ist eine Funktion des Innenwiderstands $R_i$. Die entnehmbare Leistung ist am größten, wenn der Lastwiderstand $R_L$ dem Innenwiderstand $R_i$ entspricht. Hierdurch ist die dem Notenergiespeicher entnehmbare Spitzenleistung $P_{max}$ definiert. Die entnehmbare Spitzenleistung $P_{max}$ ist proportional zum Kehrwert des Innenwiderstands $R_i$:

$$P_{max} \propto \frac{1}{R_i}$$

Insbesondere Windenergieanlagen und die in ihnen verwendeten Notenergiespeicher können extremen Temperaturen ausgesetzt sein. An besonders kalten Standorten führt dies zum Beispiel zur Eisbildung auf den Rotorblättern, wodurch zum einen die Aerodynamik der Rotorblätter nachteilig beeinflusst wird und zum anderen die Gefahr besteht, dass Eis von den Rotorblättern herabstürzt und zu Schäden an Einrichtungen oder sogar Personen in der Umgebung führt. Auch innerhalb von Windenergieanlagen führen besonders niedrige Temperaturen zu Problemen. Beispiele hierfür sind die Bildung von Reif oder Tauwasser, welches bei elektrischen Einrichtungen naturgemäß problematisch ist. Die elektrischen Einrichtungen können durch niedrige Temperaturen aber nicht nur indirekt, wie zum Beispiel über Tauwasser, sondern auch direkt beeinträchtigt werden. So kann insbesondere die bei leistungselektronischen Bauteilen übliche Erwärmung zu starken Temperaturdifferenzen innerhalb der elektronischen Einrichtungen führen, wodurch mechanische Spannungen verursacht werden, die beispielsweise Lötstellen schädigen können.

Auch die Energiespeicherelemente in den Notenergiespeichern werden durch niedrige Temperaturen wesentlich beeinflusst. Die meisten heutzutage verwendeten Energiespeicherelemente zeigen eine starke Erhöhung des Innenwiderstands $R_i$ mit abnehmender Temperatur. Da ein höherer Innenwiderstand $R_i$ höhere Verluste $E_V$ bedeutet, ist somit die einem Notenergiespeicher bei einer niedrigen Temperatur entnehmbare Energie $E_L$ deutlich kleiner als die bei einer höheren Temperatur entnehmbare Energie $E_L$.

Das Gleiche gilt für die dem Notenergiespeicher entnehmbare Spitzenleistung $P_{max}$.

Um eine ausreichende den Notenergiespeichern entnehmbare Energie $E_L$ zu gewährleisten, wird im Stand der Technik die Luft der Schaltschränke, in denen sich die Notenergiespeicher befinden, durch Heizlüfter erwärmt, bevor eine kalte Windenergieanlage in Betrieb geht. Sobald die Luft eine voreingestellte Temperatur, zum Beispiel 5 °C, erreicht hat, wird über einen Thermoschalter ein Signal ausgegeben, der die Betriebsbereitschaft des Notenergiespeichers signalisiert. Dieser Aufwärmprozess ist relativ zeitaufwändig und verzögert somit die Inbetriebnahme einer Windenergieanlage erheblich. Ferner besteht einige Unsicherheit über die tatsächlich entnehmbare Energie $E_L$, da die Lufttemperatur nicht unbedingt eine zuverlässige Aussage über die Temperatur, insbesondere die Kerntemperatur, der Energiespeicherelemente zulässt. Daher wird häufig mit Sicherheitsaufschlägen gearbeitet. Zum Beispiel wird das Signal, das die Betriebsbereitschaft signalisiert erst bei einer Lufttemperatur im Schaltschrank von 10 °C statt bei 5 °C ausgegeben. Hierdurch verzögert sich die Inbetriebnahme der Windenergieanlage weiter, was Verluste für den Betreiber der Windenergieanlage durch deren längeren Stillstand bedeutet. Gravierendere Auswirkungen wären zu befürchten, wenn die entnehmbare Energie $E_L$ anhand der Lufttemperatur zu hoch eingeschätzt würde und die Windenergieanlage in Betrieb genommen werden würde, obwohl die entnehmbare Energie $E_L$ nicht für eine Notfahrt der Rotorblätter in die Fahnenstellung ausreichte. Fiele in diesem Fall das Netz aus, blieben während einer Notfahrt die Rotorblätter zumindest teilweise im Wind stehen, wodurch bei aufkommenden starken Wind die Windenergieanlage in eine Überdrehzahl ginge und zerstört werden könnte.

Damit ist es die Aufgabe der Erfindung, ein Verfahren zur Betriebsvorbereitung eines Notenergiespeichers, ein Verfahren zur Betriebsvorbereitung eines Pitchsystems für eine Windenergieanlage und ein Computerprogrammprodukt anzugeben, die auch bei niedriger Ausgangstemperatur des Notenergiespeichers anwendbar sind, sowie ein Pitchsystem und eine Windenergieanlage anzugeben, die auch bei niedriger Ausgangstemperatur schnell und sicher betriebsbereit sind.

Die zuvor hergeleitete und aufgezeigte Aufgabe ist ausgehend von dem eingangs beschriebenen Verfahren zur Betriebsvorbereitung eines Notenergiespeichers dadurch gelöst, dass der Notenergiespeicher über eine Entladeeinrichtung zum Erwärmen des Notenergiespeichers entladen wird und die dem Notenergiespeicher entnehmbare Energie $E_L$ und/oder die dem Notenergiespeicher entnehmbare Spitzenleistung $P_{max}$ erneut bestimmt

wird.

Die Erfindung macht sich den Nachteil des steigenden Innenwiderstandes $R_i$ bei niedrigen Temperaturen zu Nutze, um durch ein Entladen des Notenergiespeichers den Notenergiespeicher zu erwärmen. Durch die Erwärmung des Notenergiespeichers verringert sich der Innenwiderstand $R_i$. Da der Innenwiderstand $R_i$ für einen wesentlichen Teil der Verluste $E_V$ verantwortlich ist, verringern sich diese ebenfalls. Entsprechend nimmt die dem Notenergiespeicher entnehmbare Spitzenleistung $P_{max}$ durch die Verringerung des Innenwiderstands $R_i$ zu.

Besonders bevorzugt wird während des Entladens die dem Notenergiespeicher entnehmbare Energie $E_L$ und/oder die dem Notenergiespeicher entnehmbare Spitzenleistung $P_{max}$ kontinuierlich bestimmt. Hierdurch wird sichergestellt, dass der Notenergiespeicher nur soweit wie nötig entladen wird. Alternativ kann das Entladen des Notenergiespeichers für einen vorbestimmten Zeitraum erfolgen, oder bis eine vorbestimmte Energiemenge dem Notenergiespeicher entnommen worden ist.

Vorzugsweise wird der Notenergiespeicher über die Entladeeinrichtung mit einem Lastwiderstand $R_L$ belastet, der kleiner als der Innenwiderstand $R_i$ ist, insbesondere höchstens halb so groß wie der Innenwiderstand $R_i$ ist, besonders bevorzugt höchstens zehn Prozent des Innenwiderstands $R_i$ beträgt. Auf diese Weise wird der Großteil der dem Notenergiespeicher beim Entladen entnommenen Energie am Innenwiderstand $R_i$ in Wärme umgewandelt.

Gemäß einer vorteilhaften Weiterbildung der Erfindung ist vorgesehen, dass der Notenergiespeicher geladen wird, wenn die erneute Bestimmung zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{max}$ einen festlegbaren Mindestleistungswert nicht erreicht hat und die dem Notenergiespeicher entnehmbare Energie $E_L$ und/oder die dem Notenergiespeicher entnehmbare Spitzenleistung $P_{max}$ erneut bestimmt wird. Für den Fall, dass durch das Entladen des Notenergiespeichers alleine nicht die notwendige Mindestenergie und/oder nicht die notwendige Mindestleistung erreicht werden, kann durch einfaches Laden des Notenergiespeichers dieses Ziel bzw. diese Ziele dennoch erreicht werden. Der Notenergiespeicher kann zum Beispiel für einen vorbestimmten Zeitraum, mit einer vorbestimmten Energiemenge oder bis zu einem vorbestimmten Level geladen werden, wobei das Level insbesondere mindestens 80 %, vorzugsweise mindestens 90 % und besonders bevorzugt mindestens 95 % der maximal im Notenergiespeicher speicherbaren Energiemenge beträgt.

Eine vorteilhafte Ausgestaltung der Erfindung zeichnet sich dadurch aus, dass vor dem Entladen des Notenergiespeichers der Notenergiespeicher geladen wird. Sofern der Notenergiespeicher zu Beginn des erfindungsgemäßen Verfahrens nur eine sehr geringe Energiemenge enthält oder sogar vollständig entladen ist, ist es vorteilhaft, den Notenergiespeicher zunächst zu Laden, um das darauffolgende Entladen des Notenergiespeichers zu ermöglichen. Zum Laden des Notenergiespeichers ist vorzugsweise eine Ladeeinrichtung vorgesehen. Die Ladeeinrichtung kann zum Beispiel durch einen Gleichrichter gebildet werden, der den Wechselstrom eines Versorgungsnetzes in einen Gleichstrom gleichrichtet. Insbesondere kann die Ladeeinrichtung auch durch den Energieverbraucher selbst gebildet werden, wenn dieser beispielsweise einen Motor aufweist, der auch als Generator betreibbar ist und durch den Energie in den Notenergiespeicher speisbar ist.

Gemäß einer besonders vorteilhaften Weiterbildung der Erfindung ist vorgesehen, dass das Laden des Notenergiespeichers höchstens mit dem maximal zulässigen Ladestrom des Notenergiespeichers erfolgt. Durch diese Strombegrenzung wird der Notenergiespeicher vor Überlastungen geschützt und die Lebensdauer des Notenergiespeichers erhöht.

Bei einer bevorzugten Ausgestaltung der Erfindung ist vorgesehen, dass die Entladeeinrichtung den einen Energieverbraucher oder wenigstens einen der Energieverbraucher umfasst. Somit kann der eine Energieverbraucher oder wenigstens einer der Energieverbraucher als Lastwiderstand fungieren über den der Notenergiespeicher entladen werden kann. Hierdurch kann auf einen separaten Lastwiderstand, der lediglich dem Entladen des Notenergiespeichers dient, verzichtet werden. Wenn der Energieverbraucher beispielsweise ein Elektromotor eines Pitchsystems ist, kann bei dem Entladen des Notenergiespeichers über den Elektromotor nicht nur der Notenergiespeicher erwärmt werden, sondern gleichzeitig auch der Elektromotor erwärmt und somit auf den bevorstehenden Betrieb vorbereitet werden. Ist ferner ein Bremswiderstand, auch Bremschopper genannt, vorhanden, der der Dissipation überschüssiger Energie dient, kann auch dieser Bremswiderstand als Lastwiderstand fungieren.

Bei einer weiteren bevorzugten Ausgestaltung der Erfindung ist vorgesehen, dass die Entladeeinrichtung wenigstens einen Heizwiderstand aufweist, deren Abwärme wiederum zum direkten oder indirekten Heizen des Notenergiespeichers verwendet wird. Der Heizwiderstand kann beispielsweise in unmittelbare Nähe des Notenergiespeichers angeordnet sein, im direkten Kontakt mit dem Notenergiespeicher stehen oder gleichzeitig als Heizwiderstand eines Heizlüfters fungieren. Hierdurch wird nicht nur die beim Entladen des Notenergiespeichers am Innenwiderstand anfallende Wärme zum Erwärmen des Notenergiespeichers genutzt, sondern auch die in der Entladeeinrichtung in Wärme umgewandelte elektrische Leistung.

Gemäß einer weiteren bevorzugten Ausgestaltung der Erfindung ist vorgesehen, dass die Energiespeicherelemente Kondensatoren, insbesondere Ultrakondensatoren aufweisen. Die Notenergiespeicher können sowohl eine einzelne Kondensatorzelle als auch eine Parallelschaltung und/oder Reihenschaltung von mehreren Kondensatorzellen aufweisen. Die Kapazität C des Notenergiespeichers bezeichnet bei mehreren miteinander verschalteten Kondensatorzellen somit die resultierende Gesamtkapazität C der miteinander verschalteten Kondensatorzellen.

Der Begriff Ultrakondensatoren umfasst elektrochemische Kondensatoren, die sowohl eine Doppelschichtkapazität als auch eine Pseudokapazität aufweisen. Teilweise wird auch der Begriff Superkondensatoren verwendet. Je nachdem welche der beiden Kapazitäten überwiegt, werden die Ultrakondensatoren in eine von drei Familien eingeordnet. Als Doppelschichtkondensatoren oder EDLC (electric double-layer capacitor) werden Ultrakondensatoren bezeichnet, bei denen die Doppelschichtkapazität überwiegt. Als Pseudokondensatoren werden Ultrakondensatoren bezeichnet, bei denen die Pseudokapazität überwiegt. Als Hybridkondensatoren werden Ultrakondensatoren bezeichnet, bei denen die Doppelschichtkapazität und die Pseudokapazität in etwa gleichem Maße zur Gesamtkapazität C des Ultrakondensators beitragen. Der Einfluss der Temperatur auf den Innenwiderstand $R_i$ ist bei Kondensatoren besonders deutlich und ist zumeist am stärksten bei Temperaturen von unter 0 °C.

Die Bestimmung der Kapazität $C$ des Notenergiespeichers kann ebenso wie die Bestimmung des Innenwiderstandes $R_i$ des Notenergiespeichers durch das kurzzeitige Entladen des Notenergiespeichers über einen Widerstand und die Messung der Spannung und des Entladestroms erfolgen.

Die in dem Notenergiespeicher gespeicherte Energie $E_C$ ergibt sich somit zu:

$$E_C = \frac{1}{2} C U_L^2$$

Die in diese Berechnung einfließende Ladespannung $U_L$ ist ebenfalls durch einfachste Messungen bestimmbar. Die entnehmbare Energie $E_L$ lässt sich demnach gemäß der eingangs beschriebenen Näherung wie folgt berechnen:

$$E_L = E_C - E_V \approx \frac{1}{2} C U_L^2 - \int_{t_0}^{t_1} R_i I^2(t)\,dt$$

Darüber hinaus ist es vorteilhaft, wenn der Entladestrom auf einen Höchstwert begrenzt wird, wobei insbesondere der Höchstwert ein Wert kleiner oder gleich der maximal zulässigen Verlustleistung der Entladeeinrichtung gewählt ist. Auf diese Weise wird die Entladeeinrichtung vor Überlastungen geschützt.

Gemäß einer weiteren bevorzugten Weiterbildung der Erfindung ist vorgesehen, dass die Begrenzung des Entladestroms durch eine Pulsweitenmodulation erfolgt, wobei insbesondere der Spitzenentladestrom auf den maximal zulässigen Pulsstrom des Stromkreises umfassend den Notenergiespeicher und die Entladeeinrichtung beschränkt wird. Der Entladestrom ist hierbei die über mehrere Pulse gemittelte resultierende Stromstärke. Der Spitzenentladestrom bezeichnet die maximale Stromstärke, den ein einzelner Puls der Pulsweitenmodulation erreicht.

Bei einer vorteilhaften Ausgestaltung der Erfindung ist vorgesehen, dass wenigstens eine physikalischen Größe, die eine Aussage über die Kerntemperatur des einen Energiespeicherelements oder der mehreren Energiespeicherelemente des Notenergiespeichers zulässt, gemessen wird, die Kerntemperatur auf Grundlage der physikalischen Größe oder der physikalischen Größen berechnet wird und das Entladen des Notenergiespeichers mindestens solange erfolgt, bis die Kerntemperatur einen festlegbaren Temperaturschwellwert erreicht hat. Dies bietet gegenüber der aus dem Stand der Technik bekannten Methode die Lufttemperatur zu bestimmen, eine deutlich aussagekräftigere Möglichkeit zur Temperaturbestimmung. Die Betriebsbereitschaft gilt hierbei erst dann als festgestellt, wenn der Temperaturschwellwert erreicht wird. D. h. die Inbetriebnahme des Notenergiespeichers kann erst dann erfolgen.

Gemäß einer weiteren vorteilhaften Ausgestaltung der Erfindung ist vorgesehen, dass bei der Berechnung der Kerntemperatur Alterungseffekte des Notenergiespeichers, die den Zusammenhang zwischen der physikalischen Größe oder den physikalischen Größen und der Kerntemperatur verändern, berücksichtigt werden. Der Zusammenhang zwischen der physikalischen Größe oder den physikalischen Größen und der Kerntemperatur kann sich mit der Zeit und/oder mit der Anzahl der Lade/Entladezyklen des Notenergiespeichers verändern. Die Art und der Umfang dieser Veränderungen ist häufig bekannt und kann somit bei der Berechnung der Kerntemperatur berücksichtigt werden, wodurch sich die Genauigkeit der Berechnung auch bei gealterten Notenergiespeichern aufrechterhalten lässt.

Bei einer besonders vorteilhaften Ausgestaltung der Erfindung ist vorgesehen, dass die physikalische Größe oder die physikalischen Größen die Kapazität $C$ des Notenergiespeichers und/oder den Innenwiderstand $R_i$ des Notenergiespeichers umfassen. Wie bereits beschrieben zeigt der Innenwiderstand $R_i$ eine deutliche Temperaturabhängigkeit, somit kann ausgehend vom Innenwiderstand $R_i$ auf die Temperatur des Notenergiespeichers bzw. der Energiespeicherelemente geschlossen werden. Darüber hinaus ist auch die Kapazität $C$ temperaturabhängig und kann auf analoge Weise zur Bestimmung der Temperatur des Notenergiespeichers bzw. der Energiespeicherelemente herangezogen werden.

Die zuvor hergeleitete und aufgezeigte Aufgabe ist ausgehend von dem eingangs beschriebenen Verfahren zur Betriebsvorbereitung eines Pitchsystems für eine Windenergieanlage dadurch gelöst, dass eines der zuvor beschriebenen Verfahren auf den einen Notenergiespeicher oder wenigstens einen der Notenergiespeicher des Pitchsystems angewendet wird. Die zuvor hergeleitete und aufgezeigte Aufgabe ist ausgehend von dem eingangs beschriebenen Pitchsystem dadurch gelöst, dass das Pitchsystem zur Ausführung des vorgenannten Verfahrens ausgestaltet ist. Die zuvor hergeleitete und aufgezeigte Aufgabe ist ausgehend von der eingangs beschriebenen Windenergieanlage dadurch gelöst, dass die Windenergieanlage ein derartiges Pitchsystem umfasst.

Die Ausführung der einzelnen Verfahrensschritte der erfindungsgemäßen Verfahren kann zum Beispiel durch ein Computerprogramm erfolgen, welches auf einem Speichermedium, wie zum Beispiel einem Halbleiterspeicher, einem magnetischen Speicher oder einem optischen Speicher, gespeichert ist und durch eine Steuerungseinrichtung verarbeitet wird.

Im Einzelnen gibt es nun eine Vielzahl von Möglichkeiten, das erfindungsgemäße Verfahren zur Betriebsvorbereitung eines Notenergiespeichers auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt

Fig. 1 schematisch den Zusammenhang zwischen der Temperatur $T$ eines Energiespeicherelements und seinem Innenwiderstand $R_i$,

Fig. 2 ein Ablaufdiagram einer bevorzugten Ausgestaltung des erfindungsgemäßen Verfahrens und

Fig. 3 schematisch einen Teil eines erfindungsgemäßen Pitchsystems.

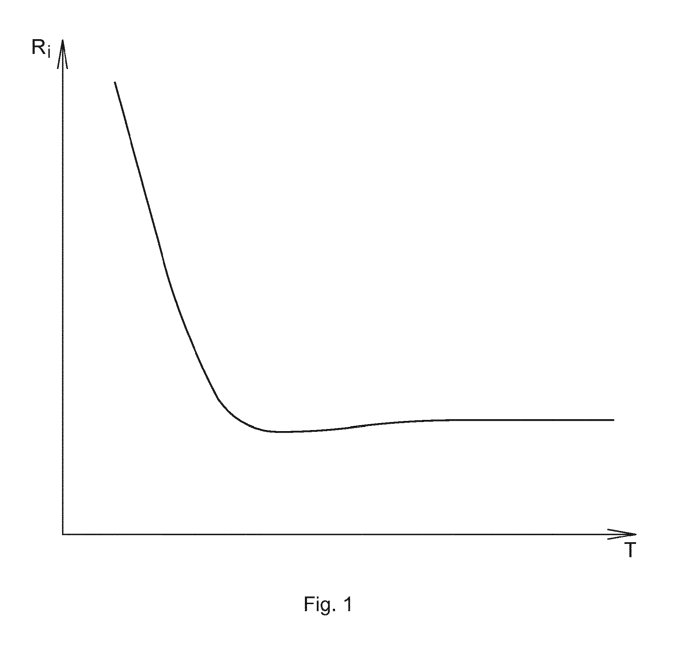

Fig. 1 zeigt schematisch den Zusammenhang zwischen der Temperatur $T$ eines Energiespeicherelements und seinem Innenwiderstand $R_i$. Hierzu ist in dem Diagramm der Fig. 1 auf der Abszisse die Temperatur $T$ und auf der Ordinate der Innenwiderstand $R_i$ eines beispielhaften Energiespeicherelements aufgetragen. Es ist deutlich zu erkennen, dass bei Unterschreiten einer gewissen Temperatur $T$ der Innenwiderstand $R_i$ stark ansteigt. Die Temperatur $T$, ab der der Innenwiderstand $R_i$ stark ansteigt, ist vom Typ des Energiespeicherelements abhängig. Für Ultrakondensatoren liegt diese Temperatur T häufig im Bereich um 0 °C.

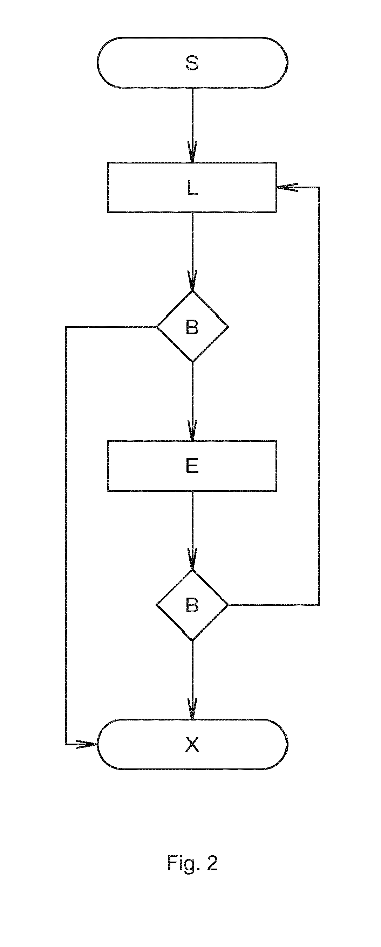

Fig. 2 zeigt anhand eines Ablaufdiagramms eine bevorzugte Ausgestaltung des erfindungsgemäßen Verfahrens. Nach dem Start (S) des Verfahrens wird zunächst der Notenergiespeicher geladen (L), um sicherzustellen, dass ausreichend Energie für die weiteren Verfahrensschritte im Notenergiespeicher gespeichert ist. Dieser Verfahrensschritt kann insbesondere dann wegfallen, wenn davon ausgegangen werden kann, dass bereits ausreichend Energie für die weiteren Verfahrensschritte im Notenergiespeicher gespeichert ist. Im nächsten Schritt wird die dem Notenergiespeicher entnehmbare Energie $E_L$ und/oder die dem Notenergiespeicher entnehmbare Spitzenleistung $P_{max}$ bestimmt (B). Wenn diese Bestimmung (B) zum Ergebnis hat, dass die dem Notenergiespeicher entnehmbare Energie $E_L$ einen festlegbaren Mindestenergiewert erreicht hat und/oder die dem Notenergiespeicher entnehmbare Spitzenleistung $P_{max}$ einen festlegbaren Mindestleistungswert erreicht hat, dann wird bereits die Betriebsbereitschaft festgestellt (X) und insbesondere ein Signal an eine übergeordnete Steuerungseinrichtung ausgegeben, wobei das Signal die Betriebsbereitschaft signalisiert.

Wenn die Bestimmung (B) zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{max}$ einen festlegbaren Mindestleistungswert nicht erreicht hat, dann wird zunächst der Notenergiespeicher über eine Entladeeinrichtung zum Erwärmen des Notenergiespeichers entladen (E). Hierauf wird die dem Notenergiespeicher entnehmbare Energie $E_L$ und/oder die dem Notenergiespeicher entnehmbare Spitzenleistung $P_{max}$ erneut bestimmt (B). Die erneute Bestimmung (B) kann auch kontinuierlich während des Entladens (E) erfolgen, so dass das die beiden Verfahrensschritte im Wesentlichen parallel ablaufen. Wenn die erneute Bestimmung (B) zum Ergebnis hat, dass die dem Notenergiespeicher entnehmbare Energie $E_L$ einen festlegbaren Mindestenergiewert erreicht hat und/oder die dem Notenergiespeicher entnehmbare Spitzenleistung $P_{max}$ einen festlegbaren Mindestleistungswert erreicht hat, dann wird die Betriebsbereitschaft festgestellt (X) und insbesondere ein Signal an eine übergeordnete Steuerungseinrichtung ausgegeben, wobei das Signal die Betriebsbereitschaft signalisiert.

Wenn die erneute Bestimmung (B) zum Ergebnis hatte, dass die dem Notenergiespeicher entnehmbare Energie $E_L$ einen festlegbaren Mindestenergiewert nicht erreicht hat und/oder die dem Notenergiespeicher entnehmbare Spitzenleistung $P_{max}$ einen festlegbaren Mindestleistungswert nicht erreicht hat, wird der Notenergiespeicher geladen (L). Das Laden (L) kann zum Beispiel solange erfolgen bis der Notenergiespeicher zu 90 % geladen ist. Danach wird die dem Notenergiespeicher entnehmbare Energie $E_L$ und/oder die dem Notenergiespeicher entnehmbare Spitzenleistung $P_{max}$ erneut bestimmt (B).

Die durch die Schritte L, B, E und B gebildete Schleife wird solange durchlaufen, bis eine der Bestimmungen (B) zum Ergebnis hat, dass die dem Notenergiespeicher entnehmbare Energie $E_L$ einen festlegbaren Mindestenergiewert erreicht hat und/oder die dem Notenergiespeicher entnehmbare Spitzenleistung $P_{max}$ ei-

nen festlegbaren Mindestleistungswert erreicht hat. Alternativ kann die Schleife nach einer vorgegebenen maximalen Anzahl von Durchgängen unterbrochen und ein Fehlersignal an eine Steuerungseinrichtung ausgegeben werden.

Wird das erfindungsgemäße Verfahren zum Beispiel in einem Anwendungsbereich angewendet, in dem lediglich die dem Notenergiespeicher entnehmbare Energie $E_L$ relevant ist und die dem Notenergiespeicher entnehmbare Spitzenleistung $P_{max}$ keine Rolle spielt, wird bei der Bestimmung (B) auch nur die dem Notenergiespeicher entnehmbare Energie $E_L$ bestimmt (B) und die Betriebsbereitschaft festgestellt (X), sobald die dem Notenergiespeicher entnehmbare Energie $E_L$ den festgelegten Mindestenergiewert erreicht hat.

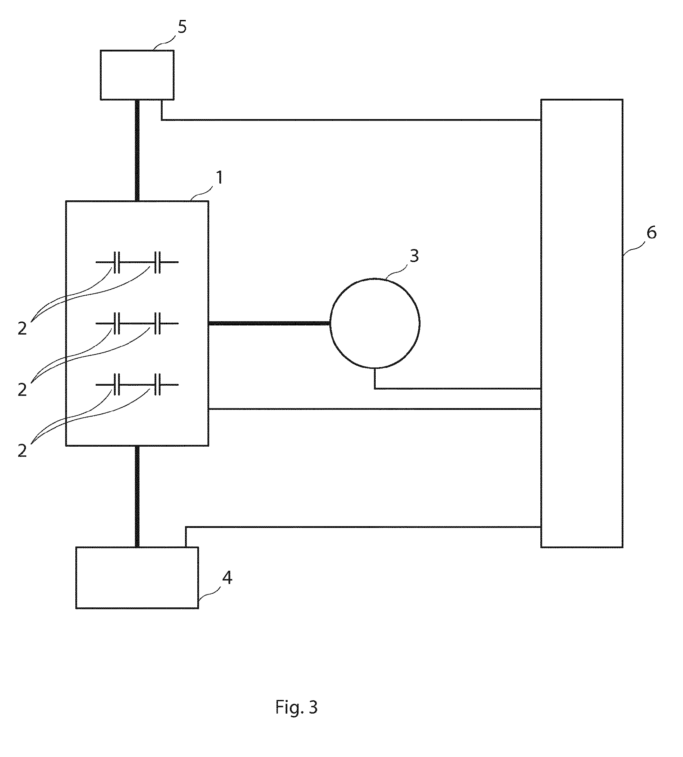

In Fig. 3 ist schematisch ein Teil eines erfindungsgemäßen Pitchsystems dargestellt. Der Notenergiespeicher (1) weiset eine Mehrzahl an Energiespeicherelementen (2) auf, die in der Figur durch die Schaltzeichen mehrerer Kondensatoren veranschaulicht werden. Der Notenergiespeicher (1) ist zur Bereitstellung von elektrischer Notenergie für einen Energieverbraucher (3) mit diesem verbunden. Ferner ist der Notenergiespeicher (1) noch mit einer Entladeeinrichtung (4) und einer Ladeeinrichtung (5) verbunden. Über die Entladeeinrichtung (4) kann der Notenergiespeicher (1) zur Erwärmung entladen werden. Die Ladeeinrichtung (5) dient dem Laden des Notenergiespeichers (1). Zusätzlich ist eine Steuerungseinrichtung (6) vorgesehen, die dazu eingerichtet ist Programminstruktionen zur Ausführung des erfindungsgemäßen Verfahrens zu verarbeiten. Hierzu kann ein Computerprogramm mit entsprechenden Programminstruktionen in einem Datenspeicher der Steuerungseinrichtung (6) gespeichert sein. Die Steuerungseinrichtung (6) ist über Signalleitungen mit den übrigen Komponenten zum Austausch von Steuersignalen verbunden. Zur Übersichtlichkeit sind die in der Fig. 3 dargestellten Komponenten separat dargestellt. Im Rahmen der Erfindung können zwei oder mehr Komponenten auch in einem Bauteil zusammengefasst sein. Ein einzelnes Bauteil kann auch die Aufgaben mehrerer Komponenten übernehmen. So kann zum Beispiel ein elektrischer Motor gleichzeitig den Energieverbraucher (3), die Entladeeinrichtung (4) und im generatorischen Betrieb sogar die Ladeeinrichtung (5) bilden.

**Bezugszeichenliste**

1    Notenergiespeicher

2    Energiespeicherelement

3    Energieverbraucher

4    Entladeeinrichtung

5    Ladeeinrichtung

6    Steuerungseinrichtung

**Patentansprüche**

1.  Verfahren zur Betriebsvorbereitung eines Notenergiespeichers (1) mit wenigstens einem Energiespeicherelement (2), wobei der Notenergiespeicher (1) zur Bereitstellung von elektrischer Notenergie für wenigstens einen Energieverbraucher (3) ausgestaltet ist, wobei die dem Notenergiespeicher (1) entnehmbare Energie $E_L$ und/oder die dem Notenergiespeicher (1) entnehmbare Spitzenleistung $P_{max}$ bestimmt wird und die Betriebsbereitschaft festgestellt wird, sobald die dem Notenergiespeicher (1) entnehmbare Energie $E_L$ einen festlegbaren Mindestenergiewert erreicht hat und/oder die dem Notenergiespeicher (1) entnehmbare Spitzenleistung $P_{max}$ einen festlegbaren Mindestleistungswert erreicht hat,

    **dadurch gekennzeichnet,**

    **dass** der Notenergiespeicher (1) über eine Entladeeinrichtung (4) zum Erwärmen des Notenergiespeichers (1) entladen wird und die dem Notenergiespeicher (1) entnehmbare Energie $E_L$ und/oder die dem Notenergiespeicher (1) entnehmbare Spitzenleistung $P_{max}$ erneut bestimmt wird.

2.  Verfahren zur Betriebsvorbereitung eines Notenergiespeichers (1) nach Anspruch 1, **dadurch gekennzeichnet, dass** der Notenergiespeicher (1) geladen wird, wenn die erneute Bestimmung zum Ergebnis hatte, dass die dem Notenergiespeicher (1) entnehmbare Energie $E_L$ einen festlegbaren Mindestenergiewert nicht erreicht hat und/oder die dem Notenergiespeicher (1) entnehmbare Spitzenleistung $P_{max}$ einen festlegbaren Mindestleistungswert nicht erreicht hat und die dem Notenergiespeicher (1) entnehmbare Energie $E_L$ und/oder die dem Notenergiespeicher (1) entnehmbare Spitzenleistung $P_{max}$ erneut bestimmt wird.

3.  Verfahren zur Betriebsvorbereitung eines Notenergiespeichers (1) nach Anspruch 1 oder 2, **dadurch gekennzeichnet, dass** vor dem Entladen des Notenergiespeichers (1) der Notenergiespeicher (1) geladen wird.

4.  Verfahren zur Betriebsvorbereitung eines Notenergiespeichers (1) nach einem der Ansprüche 2 bis 3, **dadurch gekennzeichnet, dass** das Laden des Notenergiespeichers (1) höchstens mit dem maximal zulässigen Ladestrom des Notenergiespeichers (1) erfolgt.

5.  Verfahren zur Betriebsvorbereitung eines Notenergiespeichers (1) nach einem der Ansprüche 1 bis 4, **dadurch gekennzeichnet, dass** die Entladeeinrichtung (4) den einen Energieverbraucher (3) oder wenigstens einen der Energieverbraucher (3) umfasst.

6. Verfahren zur Betriebsvorbereitung eines Notenergiespeichers (1) nach einem der Ansprüche 1 bis 5, **dadurch gekennzeichnet, dass** die Energiespeicherelemente (2) Kondensatoren, insbesondere Ultrakondensatoren aufweisen.

7. Verfahren zur Betriebsvorbereitung eines Notenergiespeichers (1) nach einem der Ansprüche 1 bis 6, **dadurch gekennzeichnet, dass** der Entladestrom auf einen Höchstwert begrenzt wird, wobei insbesondere der Höchstwert ein Wert kleiner oder gleich der maximal zulässigen Verlustleistung der Entladeeinrichtung (4) gewählt ist.

8. Verfahren zur Betriebsvorbereitung eines Notenergiespeichers (1) nach Anspruch 7, **dadurch gekennzeichnet, dass** die Begrenzung des Entladestroms durch eine Pulsweitenmodulation erfolgt, wobei insbesondere der Spitzenentladestrom auf den maximal zulässigen Pulsstrom des Stromkreises umfassend den Notenergiespeicher (1) und die Entladeeinrichtung (4) beschränkt wird.

9. Verfahren zur Betriebsvorbereitung eines Notenergiespeichers (1) nach einem der Ansprüche 1 bis 8, **dadurch gekennzeichnet, dass** wenigstens eine physikalischen Größe, die eine Aussage über die Kerntemperatur des einen Energiespeicherelements (2) oder der mehreren Energiespeicherelemente (2) des Notenergiespeichers (1) zulässt, gemessen wird, die Kerntemperatur auf Grundlage der physikalischen Größe oder der physikalischen Größen berechnet wird und das Entladen des Notenergiespeichers (1) mindestens solange erfolgt, bis die Kerntemperatur einen festlegbaren Temperaturschwellwert erreicht hat.

10. Verfahren zur Betriebsvorbereitung eines Notenergiespeichers (1) nach Anspruch 9, **dadurch gekennzeichnet, dass** bei der Berechnung der Kerntemperatur Alterungseffekte des Notenergiespeichers (1), die den Zusammenhang zwischen der physikalischen Größe oder den physikalischen Größen und der Kerntemperatur verändern, berücksichtigt werden.

11. Verfahren zur Betriebsvorbereitung eines Notenergiespeichers (1) nach einem der Ansprüche 9 bis 10, **dadurch gekennzeichnet, dass** die physikalische Größe oder die physikalischen Größen die Kapazität C des Notenergiespeichers (1) und/oder den Innenwiderstand des Notenergiespeichers (1) umfassen.

12. Verfahren zur Betriebsvorbereitung eines Pitchsystems für eine Windenergieanlage, wobei das Pitchsystem wenigstens einen Notenergiespeicher (1) mit wenigstens einem Energiespeicherelement (2) aufweist,
   **dadurch gekennzeichnet,**
   **dass** ein Verfahren nach einem der Patentansprüche 1 bis 11 auf den einen Notenergiespeicher (1) oder wenigstens einen der Notenergiespeicher (1) des Pitchsystems angewendet wird.

13. Computerprogrammprodukt mit Programminstruktionen zur Ausführung eines Verfahrens nach einem der vorhergehenden Ansprüche.

14. Pitchsystem für eine Windenergieanlage, wobei das Pitchsystem wenigstens einen Notenergiespeicher (1) mit wenigstens einem Energiespeicherelement (2) aufweist,
   **dadurch gekennzeichnet,**
   **dass** das Pitchsystem zur Ausführung des Verfahrens nach Anspruch 12 ausgestaltet ist.

15. Windenergieanlage mit einem Pitchsystem nach Anspruch 14.

Fig. 1

Fig. 2

Fig. 3

**Europäisches Patentamt**
**European Patent Office**
**Office européen des brevets**

# EUROPÄISCHER RECHERCHENBERICHT

Nummer der Anmeldung

EP 14 18 4278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 2 448 536 A1 (AVESTOR LTD PARTNERSHIP [CA]) 5. Dezember 2002 (2002-12-05) * Zusammenfassung * * Seiten 1-9 * ----- | 1-14 | INV. H02J9/00 |
| X | DE 10 2013 218069 A1 (SHANGHAI GREATWAY TOP POWER CO [CN]; SHANGHAI GUANGWEI ELECTRIC & TOOL) 20. März 2014 (2014-03-20) * das ganze Dokument * ----- | 1-15 | |
| A | EP 2 578 876 A1 (SIEMENS AG [DE]) 10. April 2013 (2013-04-10) * das ganze Dokument * ----- | 5,6,12, 14,15 | |
| A | US 2013/113441 A1 (NARITA HIROAKI [JP]) 9. Mai 2013 (2013-05-09) ----- | 2 | |
| A | US 2014/162091 A1 (HATTA TETSUYA [JP] ET AL) 12. Juni 2014 (2014-06-12) * Zusammenfassung * * Absatz [0005] * ----- | 1 | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 20. März 2015 | Jansen, Helma |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 18 4278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2015

| Im Recherchenbericht angeführtes Patentdokument | Datum der Veröffentlichung | Mitglied(er) der Patentfamilie | Datum der Veröffentlichung |
|---|---|---|---|
| CA 2448536 A1 | 05-12-2002 | KEINE | |
| DE 102013218069 A1 | 20-03-2014 | CA 2821352 A1<br>CN 102842935 A<br>DE 102013218069 A1<br>FR 2995731 A1<br>GB 2507869 A<br>US 2014077755 A1 | 20-03-2014<br>26-12-2012<br>20-03-2014<br>21-03-2014<br>14-05-2014<br>20-03-2014 |
| EP 2578876 A1 | 10-04-2013 | CN 103032264 A<br>DK 2578876 T3<br>EP 2578876 A1<br>US 2013088010 A1 | 10-04-2013<br>25-08-2014<br>10-04-2013<br>11-04-2013 |
| US 2013113441 A1 | 09-05-2013 | CN 103090080 A<br>JP 2013096551 A<br>KR 20130049734 A<br>US 2013113441 A1 | 08-05-2013<br>20-05-2013<br>14-05-2013<br>09-05-2013 |
| US 2014162091 A1 | 12-06-2014 | CN 103748734 A<br>EP 2745346 A1<br>JP 2014529161 A<br>US 2014162091 A1<br>WO 2013027638 A1 | 23-04-2014<br>25-06-2014<br>30-10-2014<br>12-06-2014<br>28-02-2013 |

EPO FORM P0461

Für nähere Einzelheiten zu diesem Anhang : siehe Amtsblatt des Europäischen Patentamts, Nr.12/82